# EUROPÄISCHE PATENTANMELDUNG

(11) **EP 4 421 330 A1**
(43) Veröffentlichungstag der Anmeldung: **28.08.2024**
(21) Anmeldenummer: 24158790.6
(22) Anmeldetag: 21.02.2024
(51) Int. Cl.: F16B 7/14, H01R 11/14

(54) **VERRIEGELUNGSSTRUKTUR EINER TELESKOPSTANGE, INSBESONDERE EINER TELESKOPISCHEN MESSSTANGE FÜR ARBEITEN UNTER SPANNUNG, SOWIE TELESKOPSTANGE MIT EINER SOLCHEN VERRIEGELUNGSSTRUKTUR**

(30) Priorität: 23.02.2023 DE 102023104416
(71) Anmelder: Cowex AG, 4133 Pratteln (CH)
(72) Erfinder: Welker, Christoph, CH-4103 Bottmingen (CH)
(74) Vertreter: Meissner Bolte Partnerschaft mbB

(57) **Zusammenfassung**

Die Erfindung betrifft eine Verriegelungsstruktur (7) einer Teleskopstange (1), insbesondere einer teleskopischen Messstange für Arbeiten unter Spannung, wobei die Teleskopstange (1) mehrere teleskopartig konzentrisch ineinander verschiebbare rohrförmige Teleskopstufenelemente (3, 4, 5, 6) aufweist, die insbesondere manuell und vorzugsweise nacheinander gegeneinander verschiebbar sind, wobei die Verriegelungsstruktur (7) ausgebildet ist, in einem ausgezogenen Zustand der Teleskopstange (1) das oberste Teleskopstufenelement (6), welches das Spitzenteil der Teleskopstange (1) bildet, in seinem vollständig ausgezogenen Zustand zu fixieren.

## Beschreibung

Die vorliegende Erfindung betrifft allgemein freigeführte Erdungs- und Kurzschließgeräte und insbesondere Teleskopstangen, vorzugsweise in Gestalt von teleskopischen Messstangen für Arbeiten unter Spannung oder in Gestalt von Teleskop-Erdungsstangen.

Erdungsstangen sind isolierende Stangen zum Heranführen von Anschließteilen von Erdungs- und Kurzschließvorrichtungen an freigeschaltete, vorher auf Spannungsfreiheit geprüfte Teile von elektrischen Anlagen zum Zweck des Erdens und Kurzschließens gemäß der Norm EN 50110 (Stand: Anmeldetag).

Eine Erdungsstange besteht üblicherweise aus einer Handhabe, einem Isolierteil sowie einer Kupplung zur Aufnahme eines Phasenanschließteils. Die Handhabe ist der Bereich, in dem die Erdungsstange während des Einsatzes gehalten werden darf. Der Isolierteil hat eine Länge von mindestens 500 mm. Er gibt dem Benutzer den nötigen Schutzabstand und ausreichend Isolation für die sichere Handhabung. Erdungsstangen zur Anwendung in der Niederspannung können von diesem Aufbau abweichen.

Es ist allgemein aus dem Stand der Technik bekannt, dass mehrteilige, steckbare Erdungsstangen existieren, die vor Ort zusammengebaut werden können.

Ferner sind Teleskop-Erdungsstangen bekannt. Hierbei besteht die Teleskop-Erdungsstange aus mehreren teleskopartig konzentrisch ineinander verschiebbaren rohrförmigen Teleskopstufenelemente, die insbesondere manuell und vorzugsweise nacheinander gegeneinander verschiebbar sind. Derartige Teleskop-Erdungsstangen erlauben den Einsatz großer Spannweiten bei geringsten Transportlängen. Die Teleskopstangen werden bis zu einer Nutzlänge, die sich aus dem Setup der jeweiligen Teleskopstufenelemente ergibt, ausgefahren.

Bei Teleskop-Erdungsstangen ist es bekannt, mindestens zwei als Teleskopstufen dienende Teleskopstufenelemente auf beliebiger Höhe zu fixieren und dabei eine Verdrehsicherheit und eine sichere Positionierung der Teleskopstufenelemente zueinander zu garantieren.

Die vorliegende Erfindung ist jedoch nicht speziell auf Erdungsstangen und insbesondere auf Teleskop-Erdungsstangen beschränkt, sondern betrifft allgemein Teleskopstangen, insbesondere also auch teleskopische Messstangen für Arbeiten unter Spannung.

Derartige Messstangen werden beispielsweise verwendet, um eine Distanz zwischen einem Prüfpunkt in einigen Metern Höhe und dem Bediener am Boden zu überbrücken, was beispielsweise bei speziellen Spannungsprüfern für den Einsatz an Oberleitungen (Fahrdrähte für Züge, Straßenbahnen) oder auch an hohen Kondensatorbatterien etc. notwendig ist. Dabei ist es bekannt, die Einstellung der für die Anwendung benötigten Länge des Spannungsprüfers beispielsweise durch aufschraubbare Verlängerungen oder verstellbare Teleskoprohre zu realisieren.

Im Hinblick auf teleskopische Stangen und insbesondere teleskopischen Messstangen ist in der Norm DIN EN 62193 (Stand: Anmeldetag) festgelegt, dass die Verriegelung des Teleskopstangensystems die Position der Teleskopstufenelemente der Teleskopstange im ausgezogenen Stand während der Verwendung sicherstellen muss. Sie muss auch das Verschieben der Teleskopstufenelemente von Hand ermöglichen.

Insbesondere ist in der genannten DIN-Norm festgelegt, dass der oberste Abschnitt der Teleskopstange, welcher auch als "Spitzenteil" bezeichnet wird, zum Arbeiten unter Spannung vollständig ausgezogen sein muss. Dabei ist besonders Vorsicht geboten, wenn die auszuführende Arbeit erfordert, dass die Teleskop-stange zwischen oder neben unter Spannung stehenden Teilen geführt werden muss.

Der vorliegenden Erfindung liegt die Aufgabe zu Grunde, eine Teleskopstange, insbesondere in Gestalt einer teleskopischen Messstange für Arbeiten unter Spannung oder in Gestalt einer teleskopischen Erdungsstange anzugeben, bei welcher in einer einfach zu realisierenden aber dennoch effektiven Weise garantiert ist, dass die in der Norm DIN EN 62103 festgelegten Sicherheitsmaßnahmen stets sichergestellt sind.

Insbesondere soll mit der anzugebenden Teleskopstange wirksam verhindert werden, dass beispielsweise im Betrieb der Teleskopstange oder aus anderen Gründen das Spitzenteil der Teleskopstange versehentlich nicht in seinem nicht vollständig ausgezogenen Zustand vorliegt, was ein hohes Gefahrenrisiko insbesondere mit sich bringen würde, wenn es die mit der Teleskopstange auszuführende Arbeit erfordert, dass die Teleskopstange zwischen oder neben unter Spannung stehenden Teilen geführt werden muss.

Die der Erfindung zu Grunde liegende Aufgabe wird insbesondere durch den Gegenstand des unabhängigen Patentanspruchs 1 gelöst, welcher eine Verriegelungsstruktur einer Teleskopstange, insbesondere einer teleskopischen Erdungsstange oder einer teleskopischen Messstange für Arbeiten unter Spannung betrifft.

Vorteilhafte Weiterbildungen der erfindungsgemäßen Verriegelungsstruktur sind in den abhängigen Patentansprüchen angegeben.

Demgemäß betrifft die Erfindung insbesondere eine Verriegelungsstruktur einer beispielsweise als Teleskop-Erdungsstange ausgeführten Teleskopstange, wobei die Teleskopstange mehrere teleskopartig konzentrisch ineinander verschiebbare rohrförmige Teleskopstufenelemente aufweist, die insbesondere manuell und vorzugsweise nacheinander gegeneinander verschiebbar sind. Die erfindungsgemäße Verriegelungsstruktur ist insbesondere ausgebildet ist, dass das - in einem ausgezogenen Zustand der Teleskopstange - oberste Teleskopstufenelement, welches das Spitzenteil der Teleskopstange bildet, in seinem vollständig ausgezogenen Zustand fixiert wird.

Insbesondere ist die Verriegelungsstruktur ausschließlich dem obersten Teleskopstufenelement zugeordnet und ausgebildet, ausschließlich nur das oberste Teleskopstufenelement relativ zu einem dem obersten Teleskopstufenelement unmittelbar benachbarten Teleskopstufenelement zu fixieren, wenn und insbesondere ausschließlich wenn das oberste Teleskopstufenelement relativ zu dem unmittelbar hierzu benachbarten Teleskopstufenelement vollständig ausgezogen ist.

Die Verriegelungsstruktur ist gemäß Realisierungen der vorliegenden Erfindung ferner ausgebildet, ein Verdrehen des obersten Teleskopstufenelements relativ zu einem dem obersten Teleskopstufenelement unmittelbar benachbarten Teleskopstufenelement zu verhindern, sobald das oberste Teleskopstufenelement relativ zu dem unmittelbar hierzu benachbarten Teleskopstufenelement vollständig ausgezogen ist.

Zum Definieren des vollständig ausgezogenen Zustands des obersten Teleskopstufenelements ist in einer leicht zu realisierenden aber dennoch effektiven Weise vorgesehen, dass dem obersten Teleskopstufenelement ein Anschlag zugeordnet ist, um einen Verschiebeweg des obersten Teleskopstufenelements relativ zu einem dem obersten Teleskopstufenelement unmittelbar benachbarten Teleskopstufenelement zu begrenzen. Selbstverständlich kommen hier aber auch andere Ausgestaltungen in Frage.

Vorzugsweise ist nur das oberste Teleskopstufenelement als ein Teleskopstangenabschnitt mit erster Isolation im Sinne der Norm DIN EN 62193 (Stand: Anmeldetag) ausgeführt.

Die Verriegelungsstruktur ist vorzugsweise ausgebildet, selbsttätig oder selbstständig das oberste Teleskopstufenelement relativ zu einem dem obersten Teleskopstufenelement unmittelbar benachbarten Teleskopstufenelement zu fixieren, insbesondere manuell lösbar zu fixieren, sobald das oberste Teleskopstufenelement relativ zu dem unmittelbar hierzu benachbarten Teleskopstufenelement vollständig ausgezogen ist.

In einer besonders bevorzugten Realisierung der erfindungsgemäßen Verriegelungsstruktur weist diese ein Gesperre auf, welches ausgebildet ist, das oberste Teleskopstufenelement als Sperrstück mittels eines Sperrers gegenüber einem dem obersten Teleskopstufenelement unmittelbar benachbart angeordneten Teleskopstufenelement zu fixieren, wenn sich das oberste Teleskopstufenelement in seinem vollständig ausgezogenen Zustand befindet.

Unter dem hierin verwendeten Begriff "Gesperre" sind allgemein mechanische Bauelemente zu verstehen, welche die Position eines beweglichen Teils (hier des obersten Teleskopstufenelements) gegenüber einem anderen Teil (hier: dem dem ersten Teleskopstufenelement unmittelbar benachbart angeordneten Teleskopstufenelement) mittels des Sperrers ganz oder bis zu einer festgelegten Grenze erhalten.

Die insbesondere als Gesperre ausgeführte Verriegelungsstruktur dient somit als Sicherheitseinrichtung, um eine ungewollte Bewegung zu verhindern, und um insbesondere zu verhindern, dass bei der Arbeit mit der Teleskopstange versehentlich das oberste Teleskopstufenelement nicht mehr in seinem vollständig ausgezogenen Zustand vorliegt. Die Verriegelungsstruktur hält somit das oberste Teleskopstufenelement sicher in seinem vollständig ausgezogenen Zustand, wie es in der Norm DIN EN 62193 gefordert wird.

Beispielsweise ist es denkbar, dass das Gesperre als Riegelgesperre ausgeführt ist. Riegelgesperre sind zweiseitig wirkende Festgesperre mit Formschluss, mit denen Vorzugslagen genau reproduziert werden können.

Alternativ hierzu kann das Gesperre auch als Rastgesperre ausgeführt sein, welches ausgebildet ist, den vollständig ausgezogenen Zustand des obersten Teleskopstufenelements als Raststellung insbesondere ab einer gewissen Annäherung des vollständig ausgezogenen Zustands des obersten Teleskopstufenelements selbstständig herzustellen.

Selbstverständlich kommen aber auch andere Ausführungsformen für die Verriegelungsstruktur in Frage.

So kann beispielsweise das die Verriegelungsstruktur ein Gesperre aufweisen, welches als Klemmgesperre ausgeführt ist. Klemmgesperre sind zweiseitig wirkende Grenzkraftgesperre mit Kraftschluss (Klemmung), die in der Regel so dimensioniert sind, dass sie unter Normalbedingungen als Festgesperre wirken.

Gemäß einer bevorzugten Realisierung der erfindungsgemäßen Verriegelungsstruktur ist vorgesehen, dass diese als Gesperre ausgeführt ist, wobei das Gesperre der Verriegelungsstruktur ein mit dem obersten Teleskopstufenelement (oder mit dem dem Teleskopstufenelement unmittelbar benachbart angeordneten Teleskopstufenelement) verbundenes Spannteil und eine mit dem dem obersten Teleskopstufenelement unmittelbar benachbart angeordneten Teleskopstufenelement (oder mit dem obersten Teleskopstufenelement) verbundene Arretierung, insbesondere in Gestalt eines Arretierhebels, aufweist.

In diesem Zusammenhang ist es denkbar, dass das Spannteil eine Spannfläche aufweist, wobei die Arretierung ausgeführt ist, insbesondere ab einer gewissen Annäherung des vollständig ausgezogenen Zustands des obersten Teleskopstufenelements derart in Wirkeingriff mit der Spannfläche des Spannteils zu treten, dass mit Hilfe des Spannteils das oberste Teleskopstufenelement in den vollständig ausgezogenen Zustand des obersten Teleskopstufenelements überführt wird oder überführbar ist.

Denkbar in diesem Zusammenhang ist es insbesondere, dass die Arretierung der Verriegelungsstruktur einen Rastbereich aufweist, welcher ausgebildet ist, in einen vorzugsweise zumindest teil- oder bereichsweise hierzu ausgeführten Aufnahmebereich des Spannteils formschlüssig einzugreifen, sobald sich das oberste Teleskopstufenelement in seinem vollständig ausgezogenen Zustand befindet.

Hierbei bietet es sich an, dass der Arretierung ein Federelement zugeordnet ist, über welches der Rastbereich der Arretierung in Richtung des Aufnahmebereichs des Spannteils vorgespannt wird. Mit dieser Maßnahme ist in einer leicht zu realisierenden aber dennoch effektiven Weise möglich, dass das oberste Teleskopstufenelement selbsttätig bzw. selbstständig relativ zu dem dem obersten Teleskopstufenelement unmittelbar benachbarten Teleskopstufenelement fixierbar ist.

Gemäß einer Realisierung der Erfindung ist vorgesehen, dass die Teleskopstange einen Teleskop-Grundkörper aufweist, der zumindest teil- oder bereichsweise als Handgriff ausgeführt sein kann, und der - in dem ausgezogenen Zustand der Teleskopstange - einen dem obersten Teleskopstufenelement gegenüberliegenden Endbereich der Teleskopstange ausbildet.

In diesem Zusammenhang ist es denkbar, dass die Teleskopstange ferner ein dem Teleskop-Grundkörper unmittelbar benachbartes erstes Teleskopstufenelement aufweist, welches bezüglich des Teleskop-Grundkörpers konzentrisch und koaxial ausgeführt und zwischen einer ersten Position, in welcher das erste Teleskopstufenelement zumindest teil- oder bereichsweise teleskopartig von dem Teleskop-Grundkörper aufgenommen ist, und einer zweiten Position verschiebbar ist, in welcher das erste Teleskopstufenelement teleskopartig zumindest teil- oder bereichsweise aus dem Teleskop-Grundkörper herausverschoben ist.

Das erste Teleskopstufenelement ist unmittelbar benachbart zu dem obersten Teleskopstufenelement ausgeführt. Insbesondere ist in diesem Zusammenhang vorgesehen, dass das oberste Teleskopstufenelement zwischen einer ersten Position, in welcher das oberste Teleskopstufenelement zumindest teil- oder bereichsweise teleskopartig von dem ersten Teleskopstufenelement aufgenommen ist, und einer zweiten Position verschiebbar ist, in welcher das oberste Teleskopstufenelement teleskopartig zumindest teil- oder bereichsweise aus dem ersten Teleskopstufenelement herausverschoben ist.

Gemäß Weiterbildungen dieser Ausführungsvariante ist - wie es häufig auch bei aus dem Stand der Technik bekannten Teleskopstangen der Fall ist - vorgesehen, dass die Teleskopstange ferner (d.h. zusätzlich zu der Verriegelungsstruktur) Fixiermittel aufweist, um das erste Teleskopstufenelement relativ zu dem Teleskop-Grundkörper in einer vorzugsweise beliebigen Position des ersten Teleskopstufenelements zwischen der ersten und der zweiten Position des ersten Teleskopstufenelements lösbar zu fixieren.

Allerdings ist die Erfindung nicht auf Teleskopstangen beschränkt, die lediglich aus drei Teilen, nämlich dem Teleskop-Grundkörper, dem ersten Teleskopstufenelement und dem obersten Teleskopstufenelement, besteht. Vielmehr ist es grundsätzlich auch denkbar, dass die Teleskopstange einen Teleskop-Grundkörper aufweist, der zumindest teil- oder bereichsweise als Handgriff ausgeführt sein kann, und der - in dem ausgezogenen Zustand der Teleskopstange - einen dem obersten Teleskopstufenelement gegenüberliegenden Endbereich der Teleskop-stange ausbildet, wobei die Teleskopstange ferner ein dem Teleskop-Grundkörper unmittelbar benachbartes erstes Teleskopstufenelement aufweist, welches bezüglich des Teleskop-Grundkörpers konzentrisch und koaxial ausgeführt und zwischen einer ersten Position, in welcher das erste Teleskopstufenelement zumindest teil- oder bereichsweise teleskopartig von dem Teleskop-Grundkörper aufgenommen ist, und einer zweiten Position verschiebbar ist, in welcher das erste Teleskopstufenelement teleskopartig zumindest teil- oder bereichsweise aus dem Teleskop-Grundkörper herausverschoben ist, wobei die Teleskop-Stange ferner mindestens ein zweites Teleskopstufenelement aufweist, welches bezüglich des ersten Teleskopstufenelements konzentrisch und koaxial ausgeführt und zwischen einer ersten Position, in welcher das mindestens eine zweite Teleskopstufenelement zumindest teil- oder bereichsweise teleskopartig von dem ersten Teleskopstufenelement aufgenommen ist, und einer zweiten Position verschiebbar ist, in welcher das mindestens eine zweite Teleskopstufenelement teleskopartig zumindest teil- oder bereichsweise aus dem ersten Teleskopstufenelement herausverschoben ist.

Dabei ist das mindestens eine zweite Teleskopstufenelement unmittelbar benachbart zu dem obersten Teleskopstufenelement ausgeführt, wobei das oberste Teleskopstufenelement zwischen einer ersten Position, in welcher das oberste Teleskopstufenelement zumindest teil- oder bereichsweise teleskopartig von dem mindestens einen zweiten Teleskopstufenelement aufgenommen ist, und einer zweiten Position verschiebbar ist, in welcher das oberste Teleskopstufenelement teleskopartig zumindest teil- oder bereichsweise aus dem mindestens einen zweiten Teleskopstufenelement herausverschoben ist.

Auch bei dieser Ausführungsvariante bietet es sich an, dass die Teleskopstange ferner Fixiermittel (zusätzlich zu der Verriegelungsstruktur) aufweist zum lösbaren Fixieren des ersten Teleskopstufenelements relativ zu dem Teleskop-Grundkörper in einer vorzugsweise beliebigen Position des ersten Teleskopstufenelements zwischen der ersten und der zweiten Position des ersten Teleskopstufenelements.

Zusätzlich hierzu bietet es sich an, dass die Teleskopstange ferner Fixiermittel aufweist zum lösbaren Fixieren des mindestens einen zweiten Teleskopstufenelements relativ zu dem ersten Teleskopstufenelement in einer vorzugsweise beliebigen Position des mindestens einen zweiten Teleskopstufenelements zwischen der ersten und der zweiten Position des mindestens einen zweiten Teleskopstufenelements.

Die Fixiermittel können beispielsweise als Bajonettverschluss oder dergleichen ausgestaltet sein. Denkbar wären aber auch andere Schraubfixierungen oder dergleichen.

An dem Teleskop-Grundkörper kann ein Gerätegehäuse angeordnet sein, in welchem sich ein Prüfgerät befindet oder in welchem ein Prüfgerät aufnehmbar ist.

Diese Ausgestaltung bietet sich insbesondere dann an, wenn die Teleskopstange nicht als reine Erdungsstange, sondern als teleskopische Messstange für Arbeiten unter Spannung verwendet wird.

Denkbar wäre es beispielsweise, dass die Teleskopstange Teil eines Spannungsprüfers für den Einsatz an Oberleitungen (Fahrdrähte für Züge, Straßenbahnen, etc.) oder auch hohen Kondensatorbatterien etc. ist. In derartigen Anwendungen muss die Distanz zwischen dem Prüfpunkt in einigen Metern Höhe und dem Bediener am Boden überbrückt werden, um einen elektrischen Kontakt mit einer Kontaktelektrode des Prüfgeräts und der zu prüfenden Leitung herzustellen.

Die Teleskop-Stange weist im ineinander verschobenen Zustand der Teleskopstufenelemente eine Transportlänge von vorzugsweise maximal 1,5 m und im auseinander verschobenen Zustand der Teleskopstufenelemente eine Auszugslänge von vorzugsweise maximal 5 m auf.

Auf diese Weise ist eine große Spannweite der Teleskopstange bei einer geringen Transportlänge realisierbar.

Gemäß Ausführungsvarianten der Erfindung ist vorgesehen, dass die Teleskopstange einen Arbeitskopf aufweist, welcher vorzugsweise lösbar an dem obersten Teleskopstufenelement angeordnet oder anordbar ist.

Die Erfindung betrifft ferner eine Teleskopstange, insbesondere teleskopischen Messstange für Arbeiten unter Spannung, wobei die Teleskopstange mehrere teleskopartig konzentrisch ineinander verschiebbare rohrförmige Teleskopstufenelemente aufweist, die insbesondere manuell und vorzugsweise nacheinander gegeneinander verschiebbar sind, und wobei die Teleskopstange eine Verriegelungsstruktur der zuvor genannten erfindungsgemäßen Art aufweist, die ausgebildet ist, in einem ausgezogenen Zustand der Teleskopstange das oberste Teleskopstufenelement, welches das Spitzenteil der Teleskopstange bildet, in seinem vollständig ausgezogenen Zustand zu fixieren.

Nachfolgend wird unter Bezugnahme auf die beiliegenden Zeichnungen eine exemplarische Ausführungsform der vorliegenden Erfindung näher beschrieben.

Es zeigen:
- FIG. 1: schematisch eine exemplarische Ausführungsform einer Teleskopstange, welche insbesondere als Teleskop-Erdungsstange ausgeführt ist, und bei welcher eine exemplarische Ausführungsform der erfindungsgemäßen Verriegelungsstruktur zum Einsatz kommt;
- FIG. 2: schematisch und in einer isometrischen Ansicht einen Bereich einer exemplarischen Ausführungsform der Teleskopstange, welche vorzugsweise mit einer Verriegelungsstruktur der vorliegenden Erfindung ausgerüstet ist;
- FIG. 3A: schematisch und in einer isometrischen Ansicht eine exemplarische Ausführungsform einer als Spannteil ausgeführten Komponente der als Gesperre ausgeführten Verriegelungsstruktur gemäß einer exemplarischen Ausführungsform der vorliegenden Erfindung;
- FIG. 3B: schematisch und in einer ersten Seitenansicht das Spannteil gemäß FIG. 3A;
- FIG. 3C: schematisch und in einer zweiten Seitenansicht/Draufsicht das Spannteil gemäß FIG. 3A;
- FIG. 3D: schematisch und in einer Aufsicht von vorne das Spannteil gemäß FIG. 3A;
- FIG. 4A: schematisch und in einer isometrischen Ansicht eine exemplarische Ausführungsform einer als Arretierung ausgeführten Komponente der als Gesperre ausgeführten Verriegelungsstruktur gemäß der exemplarischen Ausführungsform der Erfindung;
- FIG. 4B: schematisch und in einer ersten Seitenansicht die als Arretierung ausgeführte Komponente der als Gesperre ausgeführten exemplarischen Ausführungsform der Verriegelungsstruktur gemäß FIG. 4A;
- FIG. 4C: schematisch und in einer zweiten Seitenansicht/Draufsicht die in FIG. 4A gezeigte Arretierung; und
- FIG. 4D: schematisch und in einer weiteren Seitenansicht/Draufsicht die in FIG. 4A gezeigte Arretierung.

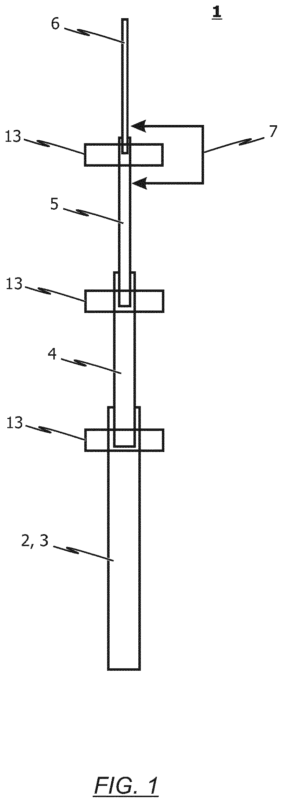

In FIG. 1 ist schematisch eine exemplarische Ausführungsform einer Teleskopstange 1 gezeigt, welche beispielsweise als teleskopische Messstange für Arbeiten unter Spannung oder als Teleskop-Erdungsstange ausgeführt sein kann.

Wie dargestellt, umfasst die exemplarische Ausführungsform der Teleskopstange 1 mehrere teleskopartig konzentrisch ineinander verschiebbare rohrförmige Teleskopstufenelemente 2 bis 6, die insbesondere manuell und vorzugsweise nacheinander gegeneinander verschiebbar sind.

Im Einzelnen ist in FIG. 1 die Teleskopstange 1 in einem vollständig ausgezogenen Zustand gezeigt. Mit anderen Worten, in FIG. 1 befindet sich die Teleskopstange 1 in einem Zustand ihrer größten Spannweite.

Die dargestellte exemplarische Ausführungsform der Teleskopstange 1 weist im Einzelnen ein erstes als Teleskop-Grundkörper 2 ausgeführtes Teleskopstufenelement 3 auf. Das erste als Teleskop-Grundkörper 2 ausgeführte Teleskopstufenelement 3 kann zumindest teil- oder bereichsweise als Handgriff ausgeführt sein.

Das als Teleskop-Grundkörper 2 ausgeführte erste Teleskopstufenelement 3 bildet in dem in FIG. 1 gezeigten (vollständig) ausgezogenen Zustand der Teleskopstange 1 einen dem obersten Teleskopstufenelement 5 gegenüberliegenden Endbereich der Teleskopstange 1.

Wie es ferner der Darstellung in FIG. 1 entnommen werden kann, weist die Teleskopstange 1 ein dem Teleskop-Grundkörper 2 3 unmittelbar benachbartes zweites Teleskopstufenelement 4 auf. Das zweite Teleskopstufenelement 4 ist vorzugsweise konzentrisch und koaxial bezüglich des Teleskop-Grundkörper 2s/des ersten Teleskopstufenelements 3 ausgeführt und zwischen einer ersten Position, in welcher das zweite Teleskopstufenelement 4 zumindest teil- oder bereichsweise teleskopartig von dem Teleskop-Grundkörper 2 3 aufgenommen ist, und einer zweiten (in FIG. 1 gezeigten) Position verschiebbar ist, in welcher das zweite Teleskopstufenelement 4 teleskopartig zumindest teil- oder bereichsweise aus dem Teleskop-Grundkörper 2 3 herausverschoben ist.

Die in FIG. 1 schematisch gezeigte Ausführungsvariante der Teleskopstange 1 weist ferner ein unmittelbar zu dem zweiten Teleskopstufenelement 4 benachbart angeordnetes drittes Teleskopstufenelement 5 auf.

Das dritte Teleskopstufenelement 5 ist bezüglich des zweiten Teleskopstufenelements 4 konzentrisch und koaxial ausgeführt und zwischen einer ersten Position, in welcher das dritte Teleskopstufenelement 5 zumindest teil- oder bereichsweise teleskopartig von dem zweiten Teleskopstufenelement 4 aufgenommen ist, und einer (in FIG. 1 gezeigten) zweiten Position verschiebbar, in welcher das dritte Teleskopstufenelement 5 teleskopartig zumindest teil- oder bereichsweise aus dem zweiten Teleskopstufenelement 4 herausverschoben ist.

Darüber hinaus weist die in FIG. 1 schematisch gezeigte Teleskopstange 1 ferner ein viertes (oberstes) Teleskopstufenelement 6 auf.

Das vierte (oberste) Teleskopstufenelement 6 ist zwischen einer ersten Position, in welcher das vierte (oberste) Teleskopstufenelement 6 zumindest teil- oder bereichsweise teleskopartig von dem dritten Teleskopstufenelement 5 aufgenommen ist, und einer (in FIG. 1 gezeigten) zweiten Position verschiebbar, in welcher das vierte (oberste) Teleskopstufenelement 6 teleskopartig zumindest teil- oder bereichsweise aus dem dritten Teleskopstufenelement 5 herausverschoben ist.

Die in FIG. 1 schematisch gezeigte Teleskopstange 1 weist ferner Fixiermittel 13 auf, um die einzelnen Teleskopstufenelemente 2 bis 6 relativ zu den unmittelbar benachbarten Teleskopstufenelementen in einer beliebigen Position manuell zu fixieren.

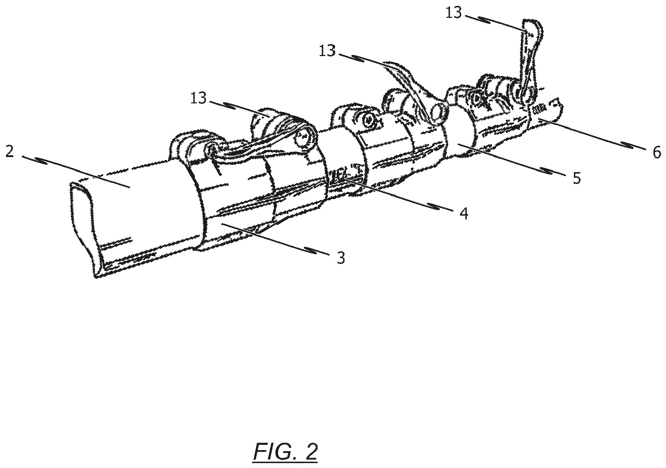

Die hierzu beispielsweise zum Einsatz kommenden Fixiermittel 13 sind in der isometrischen Ansicht eines Teilbereichs der Teleskopstange 1 in FIG. 2 näher gezeigt.

Es kann sich bei den Fixiermitteln 13 somit beispielsweise um manuell betätigbare Klemm- oder Bajonettelemente handeln, welche die entsprechenden Teleskopstufenelemente 2 bis 6 der Teleskopstange 1 bedarfsweise an der entsprechenden und insbesondere beliebig wählbaren Position fixieren.

Das in FIG. 1 gezeigte vierte (oberste) Teleskopstufenelement 6 bildet das Spitzenteil der Teleskopstange 1.

Bei der in den Zeichnungen schematisch gezeigten exemplarischen Ausführungsform der vorliegenden Erfindung ist dem vierten (obersten) Teleskopstufenelement 6, d.h. dem Spitzenteil der Teleskopstange 1, eine dedizierte Verriegelungsstruktur 7 zugeordnet, die dazu dient, das vierte (oberste) Teleskopstufenelement 6 in seinem vollständig ausgezogenen Zustand, wie er in FIG. 1 schematisch dargestellt ist, zu fixieren.

Zu betonen in diesem Zusammenhang ist insbesondere, dass die dem vierten (obersten) Teleskopstufenelement 6 zugeordnete Verriegelungsstruktur 7 keinesfalls gleichzusetzen ist mit dem zuvor beschriebenen Fixiermittel 13. Wie bereits ausgeführt, dienen die Fixiermittel 13 dazu, bedarfsweise die einzelnen Teleskopstufenelemente 2 bis 6 in einer beliebigen Position relativ zueinander zu fixieren.

Im Unterschied hierzu kommt der dem vierten (obersten) Teleskopstufenelement 6 zugeordneten Verriegelungsstruktur 7 einzig und allein die Aufgabe zu, sicherzustellen, dass das vierte (oberste) Teleskopstufenelement 6 in seinem vollständig ausgezogenen Zustand fixiert ist.

Mit anderen Worten, die Verriegelungsstruktur 7 ist ausschließlich dem vierten (obersten) Teleskopstufenelement 6 zugeordnet und ausgebildet, ausschließlich nur das vierte (oberste) Teleskopstufenelement 6 relativ zu dem dem obersten Teleskopstufenelement 6 unmittelbar benachbarten (dritten) Teleskopstufenelement 5 zu fixieren, wenn und insbesondere ausschließlich wenn das oberste Teleskopstufenelement 6 relativ zu dem unmittelbar hierzu benachbarten (dritten) Teleskopstufenelement 5 vollständig ausgezogen ist.

Insbesondere ist die in FIG. 1 nur schematisch gezeigte Verriegelungsstruktur 7 ausgebildet, auch ein Verdrehen des obersten (vierten) Teleskopstufenelements 6 relativ zu dem dem obersten (vierten) Teleskopstufenelement 6 unmittelbar benachbarten dritten Teleskopstufenelement 5 zu verhindern, sobald das oberste (vierte) Teleskopstufenelement 6 relativ zu dem unmittelbar hierzu benachbarten dritten Teleskopstufenelement 5 vollständig ausgezogen ist.

Zum Definieren des vollständig ausgezogenen Zustands des obersten (vierten) Teleskopstufenelements 6 ist dem vierten (obersten) Teleskopstufenelement 6 vorzugsweise ein (in FIG. 1 nicht gezeigter) Anschlag zugeordnet, welcher einen Verschiebeweg des obersten (vierten) Teleskopstufenelements 6 relativ zu dem dem obersten Teleskopstufenelement 6 unmittelbar benachbarten dritten Teleskopstufenelement 5 begrenzt.

Das in FIG. 1 gezeigte oberste (vierte) Teleskopstufenelement 6 ist insbesondere als ein Teleskopstangenabschnitt mit erster Isolation im Sinne der Norm DIN EN 62193 (Stand: Anmeldetag) ausgeführt.

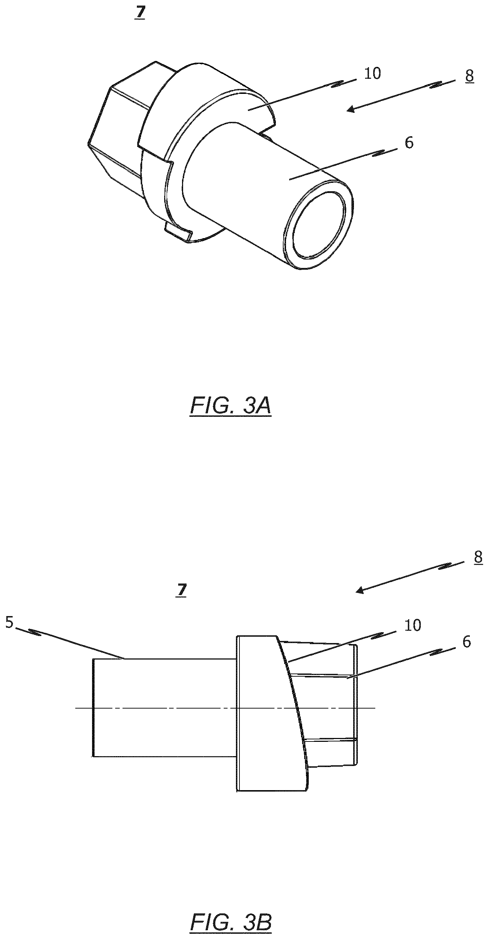

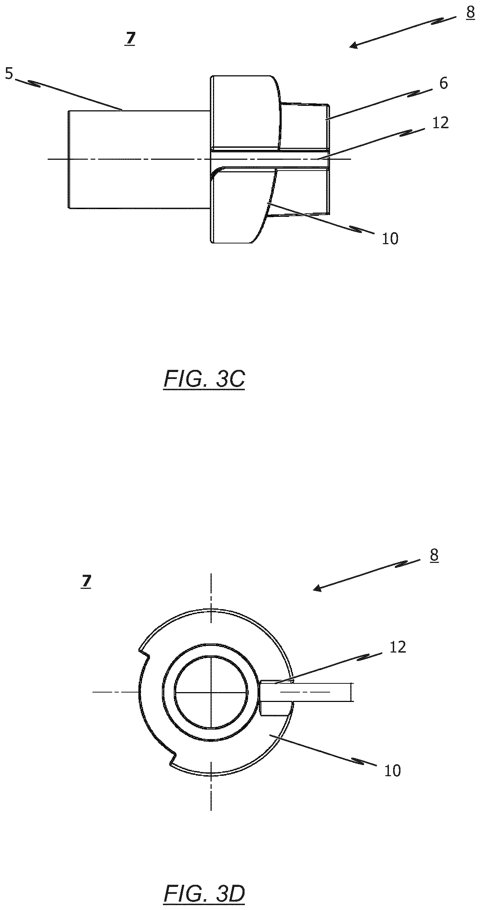

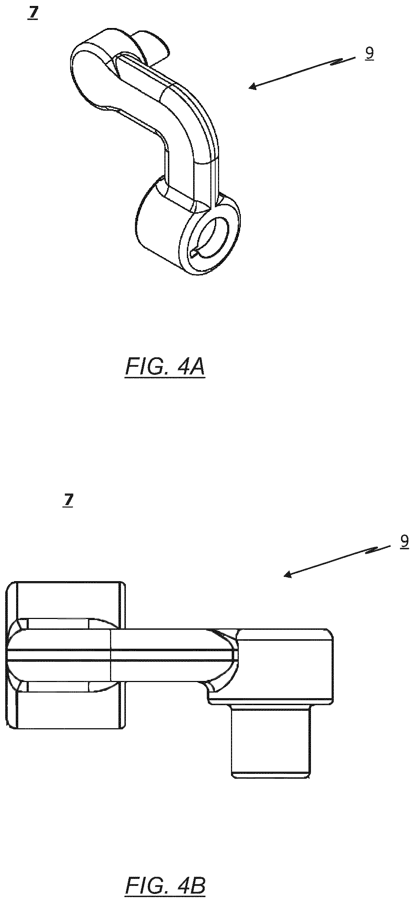

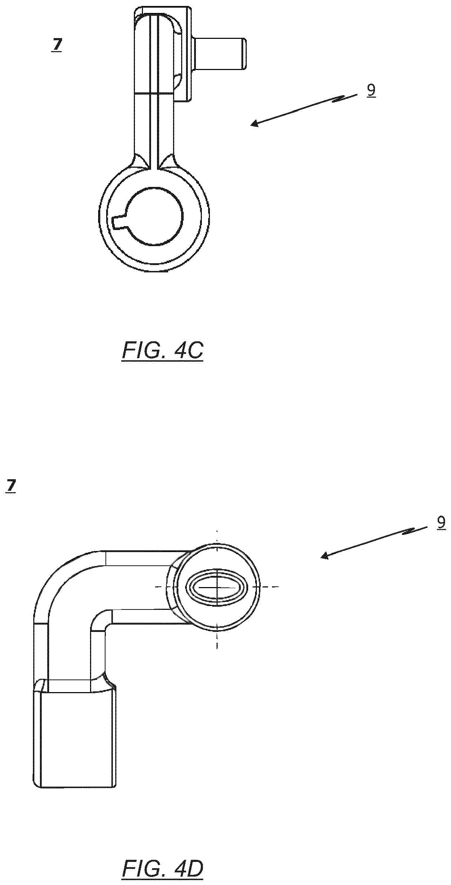

Wie es anschließend unter Bezugnahme auf die Darstellungen in FIG. 3 und FIG. 4 näher beschrieben wird, ist die in FIG. 1 nur schematisch gezeigte Verriegelungsstruktur 7, welche dem vierten (obersten) Teleskopstufenelement 6 vorzugsweise ausschließlich zugeordnet ist, ausgebildet, selbsttätig bzw. selbstständig das oberste (vierte) Teleskopstufenelement 6 relativ zu dem dem obersten Teleskopstufenelement 6 unmittelbar benachbarten dritten Teleskopstufenelement 5 zu fixieren, insbesondere manuell lösbar zu fixieren, sobald das oberste (vierte) Teleskopstufenelement 6 relativ zu dem unmittelbar hierzu benachbarten dritten Teleskopstufenelement 5 vollständig ausgezogen ist.

Die Verriegelungsstruktur 7, welche bei der exemplarischen Ausführungsform der Teleskopstange 1 gemäß FIG. 1 zum Einsatz kommt, weist insbesondere ein Gesperre auf bzw. ist insbesondere als Gesperre ausgeführt.

Im Einzelnen ist die Verriegelungsstruktur 7 ausgebildet, das oberste (vierte) Teleskopstufenelement 6 als Sperrstück mittels eines Sperrers gegenüber dem dem obersten Teleskopstufenelement 6 unmittelbar benachbart angeordneten dritten Teleskopstufenelement 5 zu fixieren, wenn sich das oberste Teleskopstufenelement 6 in seinem vollständig ausgezogenen Zustand befindet, wie es in FIG. 1 gezeigt ist.

Der Sperrer ist bei der beispielsweise in FIG. 3 und FIG. 4 gezeigten Ausführungsvariante der erfindungsgemäßen Verriegelungsstruktur 7 insbesondere als Riegel oder Raster ausgeführt.

Im Einzelnen ist es grundsätzlich denkbar, dass das Gesperre als Riegelgesperre ausgeführt ist, wobei der Sperrer als Riegel ausgestaltet ist.

Andererseits kann das Gesperre auch als Rastgesperre ausgeführt sein, welches ausgebildet ist, den vollständig ausgezogenen Zustand des obersten (vierten) Teleskopstufenelements 6 als Raststellung ab einer gewissen Annäherung des vollständig ausgezogenen Zustands des obersten (vierten) Teleskopstufenelements 6 selbstständig herzustellen.

Bei der in FIG. 3 und FIG. 4 gezeigten Ausführungsvariante ist die Verriegelungsstruktur 7 als Gesperre ausgeführt bzw. weist ein Gesperre auf. Das Gesperre setzt sich aus einem mit dem obersten Teleskopstufenelement 6 verbundenen Spannteil 8 (vgl. FIG. 3A bis FIG. 3D) und einer mit dem dritten Teleskopstufenelement 5 verbundenen Arretierung 9 (vgl. FIG. 4A bis 4D) zusammen.

Wie es der Darstellung in FIG. 3A bis FIG. 3C insbesondere entnommen werden kann, ist es denkbar, dass das Spannteil 8 eine Spannfläche 10 aufweist.

Andererseits kann die Arretierung 9 ausgeführt sein, ab einer gewissen Annäherung des vollständig ausgezogenen Zustands des obersten Teleskopstufenelements 6 derart in Wirkeingriff mit der Spannfläche 10 des Spannteils 8 zu treten, dass mit Hilfe des Spannteils 8 das oberste Teleskopstufenelement 6 in den vollständig ausgezogenen Zustand des obersten Teleskopstufenelements 6 überführt wird oder überführbar ist.

Wie es insbesondere beispielsweise der Darstellung in FIG. 3C und in FIG. 3D entnommen werden kann, ist bei der in FIG. 3 und FIG. 4 gezeigten exemplarischen Ausführungsform der erfindungsgemäßen Verriegelungsstruktur 7 vorgesehen, dass die Arretierung 9 einen Rastbereich 11 aufweist, welcher ausgebildet ist, in einen vorzugsweise zumindest teil- oder bereichsweise hierzu ausgeführten Aufnahmebereich 12 des Spannteils 8 formschlüssig einzugreifen, sobald sich das oberste (vierte) Teleskopstufenelement 6 in seinem vollständig ausgezogenen Zustand befindet (vgl. FIG. 1).

Obgleich in den Zeichnungen nicht dargestellt, ist es grundsätzlich denkbar, dass der Arretierung 9 ein Federelement zugeordnet ist, über welches der Rastbereich 11 der Arretierung 9 in Richtung des Aufnahmebereichs des Spannteils 8 vorgespannt ist.

Die Erfindung ist nicht auf die exemplarischen Ausführungsformen, wie sie schematisch in den beiliegenden Zeichnungen gezeigt sind, beschränkt, sondern ergibt sich aus einer Zusammenschau sämtlicher hierin offenbarter Merkmale.

### Bezugszeichenliste

- 1: Teleskopstange
- 2: Teleskop-Grundkörper
- 3: erstes Teleskopstufenelement
- 4: zweites Teleskopstufenelement
- 5: drittes Teleskopstufenelement
- 6: viertes (oberstes) Teleskopstufenelement/Spitzenteil
- 7: Verriegelungsstruktur
- 8: Spannteil
- 9: Arretierung/Arretierhebel
- 10: Spannfläche
- 11: Rastbereich der Arretierung
- 12: Aufnahmebereich des Spannteils
- 13: Fixiermittel

## Patentansprüche

1. Verriegelungsstruktur (7) einer Teleskopstange (1), insbesondere einer teleskopischen Messstange für Arbeiten unter Spannung, wobei die Teleskopstange (1) mehrere teleskopartig konzentrisch ineinander verschiebbare rohrförmige Teleskopstufenelemente (3, 4, 5, 6) aufweist, die insbesondere manuell und vorzugsweise nacheinander gegeneinander verschiebbar sind, wobei die Verriegelungsstruktur (7) ausgebildet ist, in einem ausgezogenen Zustand der Teleskopstange (1) das oberste Teleskopstufenelement (6), welches das Spitzenteil der Teleskopstange (1) bildet, in seinem vollständig ausgezogenen Zustand zu fixieren.

2. Verriegelungsstruktur (7) nach Anspruch 1,
wobei die Verriegelungsstruktur (7) ausschließlich dem obersten Teleskopstufenelement (6) zugeordnet und ausgebildet ist, ausschließlich nur das oberste Teleskopstufenelement (6) relativ zu einem dem obersten Teleskopstufenelement (6) unmittelbar benachbarten Teleskopstufenelement (5) zu fixieren, wenn und insbesondere ausschließlich wenn das oberste Teleskopstufenelement (6) relativ zu dem unmittelbar hierzu benachbarten Teleskopstufenelement (5) vollständig ausgezogen ist.

3. Verriegelungsstruktur (7) nach Anspruch 1 oder 2,
wobei die Verriegelungsstruktur (7) ferner ausgebildet ist, ein Verdrehen des obersten Teleskopstufenelements (6) relativ zu einem dem obersten Teleskopstufenelement (6) unmittelbar benachbarten Teleskopstufenelement (5) zu verhindern, sobald das oberste Teleskopstufenelement (6) relativ zu dem unmittelbar hierzu benachbarten Teleskopstufenelement (5) vollständig ausgezogen ist.

4. Verriegelungsstruktur (7) nach einem der Ansprüche 1 bis 3,
wobei dem obersten Teleskopstufenelement (6) ein Anschlag zugeordnet ist zum Begrenzen eines Verschiebewegs des obersten Teleskopstufenelements (6) relativ zu einem dem obersten Teleskopstufenelement (6) unmittelbar benachbarten Teleskopstufenelement (5) und zum Definieren des vollständig ausgezogenen Zustands des obersten Teleskopstufenelements (6).

5. Verriegelungsstruktur (7) nach einem der Ansprüche 1 bis 4,
wobei nur das oberste Teleskopstufenelement (6) als ein Teleskopstangenabschnitt mit erster Isolation im Sinne der Norm DIN EN 62193 (Stand: Anmeldetag) ausgeführt ist.

6. Verriegelungsstruktur (7) nach einem der Ansprüche 1 bis 5,
wobei die Verriegelungsstruktur (7) ausgebildet ist, selbsttätig das oberste Teleskopstufenelement (6) relativ zu einem dem obersten Teleskopstufenelement (6) unmittelbar benachbarten Teleskopstufenelement (5) zu fixieren, insbesondere manuell lösbar zu fixieren, sobald das oberste Teleskopstufenelement (6) relativ zu dem unmittelbar hierzu benachbarten Teleskopstufenelement (5) vollständig ausgezogen ist.

7. Verriegelungsstruktur (7) nach einem der Ansprüche 1 bis 6,
wobei die Verriegelungsstruktur (7) ein Gesperre aufweist, welches ausgebildet ist, das oberste Teleskopstufenelement (6) als Sperrstück mittels eines Sperrers gegenüber einem dem obersten Teleskopstufenelement (6) unmittelbar benachbart angeordneten Teleskopstufenelement (5) zu fixieren, wenn sich das oberste Teleskopstufenelement (6) in seinem vollständig ausgezogenen Zustand befindet.

8. Verriegelungsstruktur (7) nach Anspruch 7,
wobei das Gesperre als Riegelgesperre ausgeführt ist, und wobei der Sperrer als Riegel ausgeführt ist; oder
wobei das Gesperre als Rastgesperre ausgeführt ist, welches ausgebildet ist, den vollständig ausgezogenen Zustand des obersten Teleskopstufenelements (6) als Raststellung insbesondere ab einer gewissen Annäherung des vollständig ausgezogenen Zustands des obersten Teleskopstufenelements (6) selbstständig herzustellen.

9. Verriegelungsstruktur (7) nach Anspruch 7 oder 8,
wobei das Gesperre der Verriegelungsstruktur (7) ein mit dem obersten Teleskopstufenelement (6) oder mit dem dem Teleskopstufenelement unmittelbar benachbart angeordneten Teleskopstufenelement (5) verbundenes Spannteil (8) und eine mit dem dem obersten Teleskopstufenelement (6) unmittelbar benachbart angeordneten Teleskopstufenelement (5) oder mit dem obersten Teleskopstufenelement (6) verbundene Arretierung (9), insbesondere in Gestalt eines Arretierhebels, aufweist, wobei das Spannteil (8) eine Spannfläche (10) aufweist, und wobei die Arretierung (9) ausgeführt ist, insbesondere ab einer gewissen Annäherung des vollständig ausgezogenen Zustands des obersten Teleskopstufenelements (6) derart in Wirkeingriff mit der Spannfläche (10) des Spannteils (8) zu treten, dass mit Hilfe des Spannteils (8) das oberste Teleskopstufenelement (6) in den vollständig ausgezogenen Zustand des obersten Teleskopstufenelements (6) überführt wird oder überführbar ist, wobei die Arretierung (9) vorzugsweise einen Rastbereich (11) aufweist, welcher ausgebildet ist, in einen vorzugsweise zumindest teil- oder bereichsweise hierzu ausgeführten Aufnahmebereich (12) des Spannteils (8) formschlüssig einzugreifen, sobald sich das oberste Teleskopstufenelement (6) in seinem vollständig ausgezogenen Zustand befindet, und wobei der Arretierung (9) vorzugsweise ein Federelement zugeordnet ist, über welches der Rastbereich (11) der Arretierung (9) in Richtung des Aufnahmebereichs (12) des Spannteils (8) vorgespannt wird.

10. Verriegelungsstruktur (7) nach einem der Ansprüche 1 bis 9,
wobei die Teleskopstange (1) einen Teleskop-Grundkörper (2) aufweist, der zumindest teil- oder bereichsweise als Handgriff ausgeführt sein kann, und der - in dem ausgezogenen Zustand der Teleskopstange (1) - einen dem obersten Teleskopstufenelement (6) gegenüberliegenden Endbereich der Teleskopstange (1) ausbildet, wobei die Teleskopstange (1) ferner ein dem Teleskop-Grundkörper (2) unmittelbar benachbartes zweites Teleskopstufenelement (4) aufweist, welches bezüglich des Teleskop-Grundkörpers (2) konzentrisch und koaxial ausgeführt und zwischen einer ersten Position, in welcher das zweite Teleskopstufenelement (4) zumindest teil- oder bereichsweise teleskopartig von dem Teleskop-Grundkörper (2) aufgenommen ist, und einer zweiten Position verschiebbar ist, in welcher das zweite Teleskopstufenelement (4) teleskopartig zumindest teil- oder bereichsweise aus dem Teleskop-Grundkörper (2) herausverschoben ist, wobei das zweite Teleskopstufenelement (4) unmittelbar benachbart zu dem obersten Teleskopstufenelement (6) ausgeführt ist, wobei das oberste Teleskopstufenelement (6) zwischen einer ersten Position, in welcher das oberste Teleskopstufenelement (6) zumindest teil- oder bereichsweise teleskopartig von dem zweiten Teleskopstufenelement (4) aufgenommen ist, und einer zweiten Position verschiebbar ist, in welcher das oberste Teleskopstufenelement (6) teleskopartig zumindest teil- oder bereichsweise aus dem zweiten Teleskopstufenelement (4) herausverschoben ist, wobei die zweite Position des obersten Teleskopstufenelements (6) vorzugsweise dem vollständig ausgezogenen Zustand des obersten Teleskopstufenelements (6) entspricht; oder
wobei die Teleskopstange (1) einen Teleskop-Grundkörper (2) aufweist, der zumindest teil- oder bereichsweise als Handgriff ausgeführt sein kann, und der - in dem ausgezogenen Zustand der Teleskopstange (1) - einen dem obersten Teleskopstufenelement (6) gegenüberliegenden Endbereich der Teleskopstange (1) ausbildet, wobei die Teleskopstange (1) ferner ein dem Teleskop-Grundkörper (2) unmittelbar benachbartes zweites Teleskopstufenelement (4) aufweist, welches bezüglich des Teleskop-Grundkörpers (2) konzentrisch und koaxial ausgeführt und zwischen einer ersten Position, in welcher das zweite Teleskopstufenelement (4) zumindest teil- oder bereichsweise teleskopartig von dem Teleskop-Grundkörper (2) aufgenommen ist, und einer zweiten Position verschiebbar ist, in welcher das zweite Teleskopstufenelement (4) teleskopartig zumindest teil- oder bereichsweise aus dem Teleskop-Grundkörper (2) herausverschoben ist, und wobei die Teleskopstange (1) ferner mindestens ein drittes Teleskopstufenelement (5) aufweist, welches bezüglich des zweiten Teleskopstufenelements (4) konzentrisch und koaxial ausgeführt und zwischen einer ersten Position, in welcher das mindestens eine dritte Teleskopstufenelement (5) zumindest teil- oder bereichsweise teleskopartig von dem zweiten Teleskopstufenelement (4) aufgenommen ist, und einer zweiten Position verschiebbar ist, in welcher das mindestens eine dritte Teleskopstufenelement (5) teleskopartig zumindest teil- oder bereichsweise aus dem zweiten Teleskopstufenelement (4) herausverschoben ist, wobei das mindestens eine dritte Teleskopstufenelement (5) unmittelbar benachbart zu dem obersten Teleskopstufenelement (6) ausgeführt ist, wobei das oberste Teleskopstufenelement (6) zwischen einer ersten Position, in welcher das oberste Teleskopstufenelement (6) zumindest teil- oder bereichsweise teleskopartig von dem mindestens einen dritten Teleskopstufenelement (5) aufgenommen ist, und einer zweiten Position verschiebbar ist, in welcher das oberste Teleskopstufenelement (6) teleskopartig zumindest teil- oder bereichsweise aus dem mindestens einen dritten Teleskopstufenelement (5) herausverschoben ist, wobei die zweite Position des obersten Teleskopstufenelements (6) vorzugsweise dem vollständig ausgezogenen Zustand des obersten Teleskopstufenelements (6) entspricht.

11. Verriegelungsstruktur (7) nach Anspruch 10,
wobei die Teleskopstange (1) ferner Fixiermittel (13) aufweist zum lösbaren Fixieren des zweiten Teleskopstufenelements (4) relativ zu dem Teleskop-Grundkörper (2) in einer vorzugsweise beliebigen Position des zweiten Teleskopstufenelements (4) zwischen der ersten und zweiten Position des zweiten Teleskopstufenelements (4).

12. Verriegelungsstruktur (7) nach Anspruch 10 oder nach Anspruch 10 und 11, wobei die Teleskopstange (1) ferner Fixiermittel (13) aufweist zum lösbaren Fixieren des mindestens einen dritten Teleskopstufenelements (5) relativ zu dem zweiten Teleskopstufenelement (4) in einer vorzugsweise beliebigen Position des mindestens einen dritten Teleskopstufenelements (5) zwischen der ersten und zweiten Position des mindestens einen dritten Teleskopstufenelements (5).

13. Verriegelungsstruktur (7) nach einem der Ansprüche 9 bis 12,
wobei an dem Teleskop-Grundkörper (2) ein Gerätegehäuse angeordnet ist oder anordbar ist, in welchem sich ein Prüfgerät befindet oder in welchem ein Prüfgerät aufnehmbar ist.

14. Verriegelungsstruktur (7) nach einem der Ansprüche 1 bis 13,
wobei die Teleskopstange (1) einen Arbeitskopf aufweist, welcher vorzugsweise lösbar an dem obersten Teleskopstufenelement (6) angeordnet ist.

15. Teleskopstange (1), insbesondere teleskopischen Messstange für Arbeiten unter Spannung, wobei die Teleskopstange (1) mehrere teleskopartig konzentrisch ineinander verschiebbare rohrförmige Teleskopstufenelemente (3, 4, 5, 6) aufweist, die insbesondere manuell und vorzugsweise nacheinander gegeneinander verschiebbar sind, und wobei die Teleskopstange (1) eine Verriegelungsstruktur (7) nach einem der Ansprüche 1 bis 14 aufweist, die ausgebildet ist, in einem ausgezogenen Zustand der Teleskopstange (1) das oberste Teleskopstufenelement (6), welches das Spitzenteil der Teleskopstange (1) bildet, in seinem vollständig ausgezogenen Zustand zu fixieren.
